# EUROPÄISCHE PATENTSCHRIFT

(11) **EP 1 721 799 B1**
(45) Veröffentlichungstag und Bekanntmachung des Hinweises auf die Patenterteilung: **20.02.2008**
(21) Anmeldenummer: 06007934.0
(22) Anmeldetag: 15.04.2006
(51) Int. Cl.: B60T 17/22

(54) **Verfahren und Vorrichtung zum zeitoptimalen Auffüllen der selbsttätigen Druckluftbremsen von Eisenbahnfahrzeugen**
Method and device for a time optimized filling of the autonomous airpressure brakes of rail vehicles
Méthode et dispositif à remplissage optimalisé en temps des freins à air comprimé de véhicules ferroviaires

(30) Priorität: 10.05.2005 DE 102005022365
(43) Veröffentlichungstag der Anmeldung: 15.11.2006
(73) Patentinhaber: FEW Blankenburg GmbH, 38889 Blankenburg (DE)
(72) Erfinder: Becker, Dietmar, 38889 Blankenburg (DE); Fieck, Harald, 38889 Blankenburg (DE)
(74) Vertreter: Zinken-Sommer, Rainer

(56) Entgegenhaltungen:
- EP-A- 1 645 481
- DE-A1- 10 058 307
- DE-A1- 10 133 910

## Beschreibung

Die Erfindung betrifft ein Verfahren zum zeitoptimalen Auffüllen der selbsttätigen Druckluftbremsen von Eisenbahnfahrzeugen. Sie dient dazu, den Auffüllvorgang in Abhängigkeit von der Zuglänge und dem Füllzustand zeitoptimal und selbsttätig zu steuern.

Um Bremsproben an Eisenbahnfahrzeugen nach der Zugbildung zu rationalisieren, werden stationäre Bremsprobegeräte eingesetzt. Da hierbei eine Zufuhr von Druckluft über gesonderte externe Einrichtungen erfolgt, kann auf eine Druckluftversorgung durch ein an die Hauptluftleitung angeschlossenes Triebfahrzeug verzichtet werden. Aus der DE 101 33 910 A1 ist ein Verfahren zur Dichtheitsprobe der Hauptluftleitung bekannt, bei dem mittels eines Bremsprobegerätes, das über einen parallel zum eigentlichen Versorgungsventil geschalteten Volumenstromsensor verfügt, die Menge des nach Abschluss des erstmaligen Auffüllens der Hauptluftleitung nachströmenden Luftvolumens erfasst wird. Aus dieser Menge an nachzuspeisender Luft wird auf die Dichtheit der Hauptluftleitung geschlossen.

Die Bremsprobe mit dem Bremsprobegerät beginnt mit dem Auffüllen der Bremsen über die Hauptluftleitung. Dabei werden im Wesentlichen die Hauptluftleitung selbst und die Vorratsluftbehälter, sog. R-Behälter, an den Wagen aufgefüllt. Um den Auffüllvorgang zu beschleunigen und um gleich während des Auffüllens Überladungen der Bremsen an den Wagen zu beseitigen, wird ein höherer Druck als der Regelbetriebsdruck von 5 bar in der Hauptluftleitung eingestellt. Dies sind in der Regel 5,3 bar. Nach Erreichen von 5,3 bar in der gesamten Hauptluftleitung des Zuges wird der Druck in der Hauptluftleitung selbsttätig und allmählich unterhalb der Unempfindlichkeitsgrenze der Steuerventile auf 4,8 bar abgesenkt. Danach sind erfahrungsgemäß die Bremsen des Zuges gefüllt. Um den mit dem Auffüllen verbundenen Angleichvorgang ordnungsgemäß auszuführen, muss sichergestellt werden, dass der Druck von 5,3 bar in der Hauptluftleitung vor dem allmählichen Absenken auch am letzten Wagen des Zuges anliegt. Bei einem konstanten Einspeisedruck von 5,3 bar am Anfang des Zuges ist die Zeit bis zum Erreichen dieses Druckes am Ende des Zuges im wesentlichen abhängig von der Länge des Zuges (Hauptluftleitungsvolumen, Strömungswiderstand der Rohrleitungen und Kupplungen) sowie vom Füllzustand der Hauptluftleitung und der R-Behälter an den Wagen.

Bei einem langen Zug mit leerer Hauptluftleitung und gering gefüllten R-Behältern ist diese Zeit länger als bei einem kurzen Zug mit teilweise gefüllten R-Behältern. Dieses Problem wird bisher dadurch gelöst, dass die Druckhaltezeit für die 5,3 bar durch das Bremsprobegerät so lang eingestellt ist, dass bei dem längsten betrieblich zulässigen Zug, insbesondere 700 m bei der DB AG, mit leerer Hauptluftleitung und mäßig gefüllten R-Behältern 5,3 bar am Ende des Zuges in dieser Zeit erreicht werden. In der Praxis sind jedoch die Zuglängen variabel und der Füllzustand der Hauptluftleitung sowie der R-Behälter auch unterschiedlich. Dadurch ist die Füllzeit für relativ kurze und gut gefüllte Züge viel zu lang.

Der Erfindung liegt die Aufgabe zugrunde, ein Verfahren und eine Anordnung zum zeitoptimalen Auffüllen der selbsttätigen Druckluftbremsen zu schaffen, die es erlauben, in Abhängigkeit von der Zuglänge und dem Füllzustand selbsttätig den Auffüllvorgang so zu steuern, dass die kürzest mögliche Füllzeit realisiert wird.

Diese Aufgabe wird erfindungsgemäß in Verbindung mit dem Oberbegriff des Anspruches 1 durch die in Anspruch 1 angegebenen Merkmale gelöst.

Erfindungsgemäß wird mit Erreichen eines vorgegebenen Solldruckes im Bremsprobegerät der in die Luftleitung, nach Anspruch 4 insbesondere die Hauptluftleitung, eingespeiste Volumenstrom durch einen Volumenstromsensor erfasst und aus der Steilheit des Abklingens des Einspeisevolumenstroms, in einer definierten Zeit nach Messbeginn, die notwendige Druckhaltezeit zum Erreichen des Solldruckes in der Luftleitung am letzten Wagen berechnet. Der hierfür notwendige funktionale Zusammenhang wird nach Anspruch 2 dadurch ermittelt, dass aus Messergebnissen praktischer Füllversuche an Zügen unterschiedlicher Länge und Füllzustände eine Näherungsfunktion, d.h. Druckhaltezeit in Abhängigkeit von der Steilheit, berechnet wird.

Vorteil des erfindungsgemäßen Verfahrens ist, dass ohne äußeren Eingriff des Bedienpersonals (z.B. Eingabe der Zuglänge) der Auffüllvorgang so gesteuert wird, dass die kürzest mögliche Füllzeit realisiert wird.

Ansprüche 3 bis 5 bzw. 7 beinhalten vorteilhafte Ausführungsbeispiele der erfindungsgemäßen Lösung aus Anspruch 1.

Nach Anspruch 3 wird bei nahezu konstantem Einspeisevolumen, d.h. nahezu unverändertem Einspeisevolumenstrom, durch die Steuerung ein Signal "Hauptluftleitung gefüllt" abgegeben und der Auffüllvorgang für beendet erklärt. Das Abklingen des Einspeisevolumenstroms erfolgt unmittelbar nach Erreichen des Solldruckes sehr schnell und ändert sich nach einer bestimmten Zeit, die von der Länge und dem Füllzustand des Zuges abhängt, nahezu nicht mehr, d.h. strebt asymptotisch gegen einen bestimmten Wert, an dem der Gradient des Einspeisevolumenstroms nahezu Null ist.

Vorteil dieses Verfahrens ist, dass ohne mathematische Operationen, d.h. direkt, das Ende des Auffüllvorganges ermittelt werden kann. Hierdurch wird vorteilhaft eine weitere Vereinfachung des erfindungsgemäßen Verfahrens erreicht.

Die Erfindung wird nachstehend anhand eines Ausführungsbeispiels und einer Zeichnung mit 5 Figuren näher erläutert. Die Figuren zeigen in
- Fig. 1: den qualitativen Verlauf des Einspeisevolumenstroms V _{zu} über der Zeit bei unterschiedlichen Zuglängen und Füllzuständen,
- Fig. 2: die Druckhaltezeit in Abhängigkeit von der Steilheit,
- Fig. 3: den prinzipiellen Aufbau einer Bremsprobeanlage,
- Fig. 4: die Anordnung zur Ausführung des Verfahrens im Bremsprobegerät,
- Fig. 5: die Anordnung mit Volumenstrommessung im Nebenstrom.

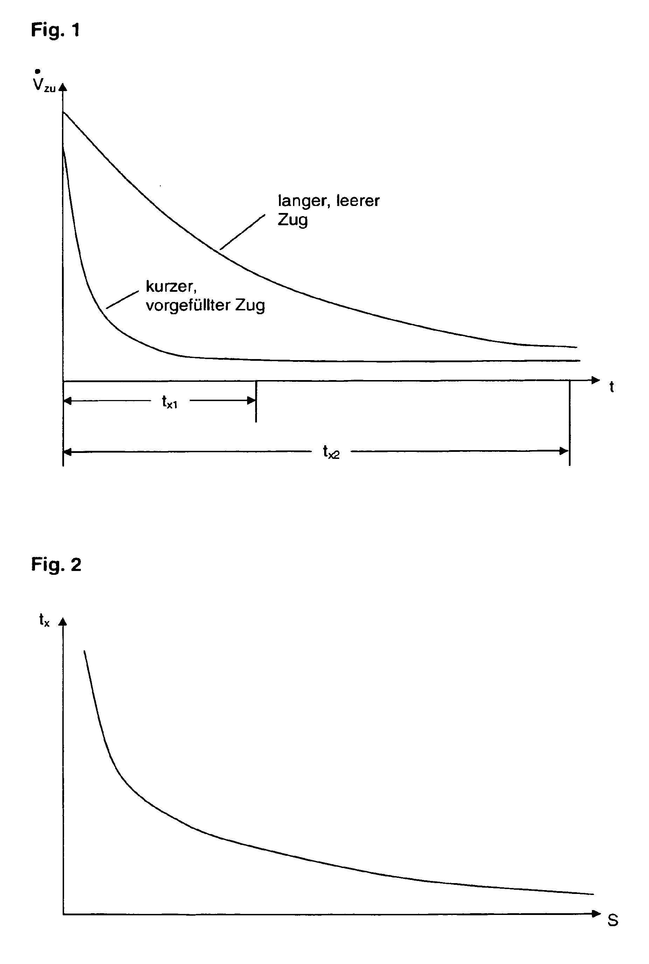

Gemäß Fig. 1 sind die Zeiten tₓ₁ und tₓ₂ die notwendigen Druckhaltezeiten, wobei tₓ₁ dem kurzen, vorgefüllten Zug und tₓ₂ dem langen, leeren Zug zugeordnet ist.

Die relevanten Steilheiten der Kurven werden dadurch ermittelt, dass durch den Messpunkt des Einspeisevolumenstroms V̇_{zu} bei Messbeginn und dem Messpunkt 20s nach Messbeginn eine Gerade gelegt und deren Steilheit (Anstieg) bestimmt wird. Die Steilheit S dieser Sekante wird dann als Argument in der Näherungsfunktion tₓ = f (S) zur Berechnung der Druckhaltezeit tₓ benutzt. In Fig. 2 ist der qualitative Verlauf einer derartigen Näherungsfunktion dargestellt. Hierbei ist die Steilheit S der negative Anstieg der Sekante.

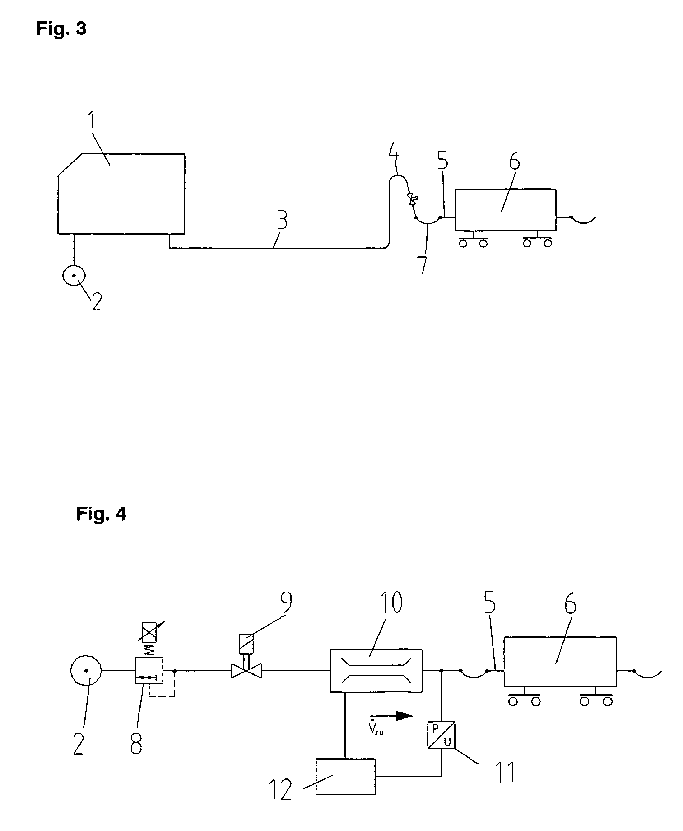

In Fig. 3 ist der prinzipielle Aufbau einer Bremsprobeanlage dargestellt. Das Bremsprobegerät (1) wird vom Druckluftnetz (2) versorgt und speist über die Rohrleitung (3), den Schlauchständer (4) die Schlauchleitung (7) in die Hauptluftleitung (5) des Zuges (6) ein.

**Fig. 4** zeigt die Anordnung zur Ausführung des Verfahrens im Bremsprobegerät. Der Druckregler (8) wird aus dem Druckluftnetz (2) versorgt und stellt an seinem Ausgang einen Druck von 5,3 bar ein. Vom Ausgang des Druckreglers strömt die Druckluft über das geöffnete Magnetventil (9) und den Volumenstromsensor (10) in die Hauptluftleitung (5) des Zuges (6). Der Druck am Ausgang des Volumenstromsensors (10) wird vom Drucksensor (11) erfasst. Die Ausgangssignale des Volumenstromsensors und des Drucksensors werden der Steuerung (12) zugeführt. Bei Erreichen von 5,3 bar am Ausgang des Volumenstromsensors beginnt die Auswertung des Einspeisevolumenstroms V̇_{zu}.

Beim Füllvorgang fließen relativ große Volumenströme. Dementsprechend muss der Volumenstromsensor dimensioniert sein. Um den Aufwand für die Volumenstrommessung zu minimieren, ist es auch möglich mit einem relativ kleinen Volumenstromsensor im Nebenstrom (Bypass) zu messen.

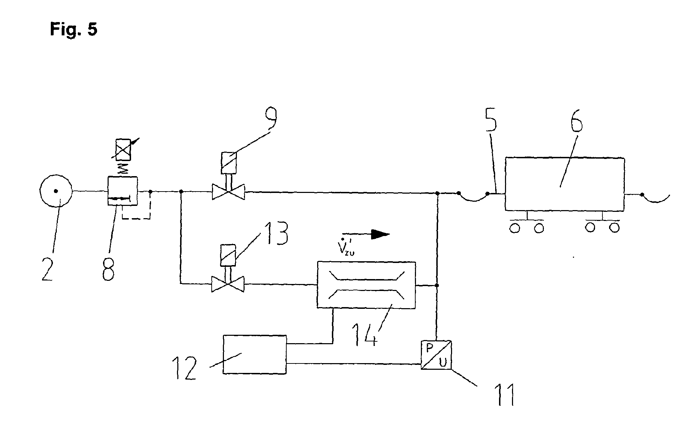

In **Fig. 5** ist eine derartige Anordnung dargestellt. Beim Füllvorgang fließt zunächst die Druckluft über das großquerschnittige Magnetventil (9) in die Hauptluftleitung (5) des Zuges (6). Das kleinquerschnittige Magnetventil (13) ist dabei geschlossen. Beim Erreichen von 5,3 bar am Ausgang des Magnetventils (9) wird das kleinquerschnittige Magnetventil (13) geöffnet. Nunmehr fließt ein Teilstrom V̇'_{zu} durch den kleindimensionierten Volumenstromsensor (14). Der Teilstrom V̇' _{zu} zeigt das gleiche Zeitverhalten wie der im Hauptstrom gemessene Einspeisevolumenstrom V̇_{zu}. Deshalb kann dieser genauso zur Auswertung herangezogen werden. Hierzu wird dessen Ausgangssignal ebenfalls der Steuerung (12) zugeführt.

### Bezugszeichenliste

- 1: Bremsprobegerät
- 2: Druckluftnetz
- 3: Rohrleitung
- 4: Schlauchständer
- 5: Hauptluftleitung
- 6: Zug
- 7: Schlauchleitung
- 8: Druckregler
- 9: Magnetventil
- 10: Volumenstromsensor
- 11: Drucksensor
- 12: Steuerung
- 13: Magnetventil

## Patentansprüche

1. Verfahren zum zeitoptimalen Auffüllen einer Luftleitung einer selbsttätigen Druckluftbremse von Eisenbahnfahrzeugen mit Hilfe eines Bremsprobegerätes, bei dem eine Zufuhr von Druckluft über gesonderte externe Einrichtungen erfolgt sowie mit Erreichen eines vorgegebenen Solldruckes im Bremsprobegerät der in die Luftleitung eingespeiste Volumenstrom durch einen Volumenstromsensor erfasst wird, **dadurch gekennzeichnet, dass** aus der Steilheit des Abklingens des Einspeisevolumenstroms innerhalb einer definierten Zeit nach Messbeginn die notwendige Druckhaltezeit zum Erreichen des Solldruckes in der Luftleitung am letzten Wagen bestimmt wird.

2. Verfahren zum zeitoptimalen Auffüllen einer Luftleitung nach Anspruch 1, **dadurch gekennzeichnet, dass** der funktionale Zusammenhang dadurch ermittelt wird, dass aus Messergebnissen praktischer Füllversuche an Zügen unterschiedlicher Länge und Füllstands eine Näherungsfunktion über die Druckhaltezeit in Abhängigkeit von der Steilheit bestimmt wird.

3. Verfahren zum zeitoptimalen Auffüllen einer Luftleitung nach mindestens einem der Ansprüche 1 bis 2, **dadurch gekennzeichnet, dass** bei nahezu konstantem Einspeisevolumen, d.h. nahezu unverändertem Einspeisevolumenstrom, durch die Steuerung ein Signal "Luftleitung gefüllt" abgegeben und damit der Befüllvorgang für beendet erklärt wird.

4. Verfahren zum zeitoptimalen Auffüllen einer Luftleitung nach mindestens einem der Ansprüche 1 bis 3, **dadurch gekennzeichnet, dass** als Luftleitung die Hauptluftleitung verwendet wird.

5. Verfahren zum zeitoptimalen Auffüllen einer Luftleitung nach Anspruch 4, **dadurch gekennzeichnet, dass** als vorgegebener Solldruck im Bremsprobegerät 5,2 bar bis 5,4 bar, insbesondere 5,3 bar eingestellt wird.

## Claims

1. A method for the time-optimized filling of an air pipe of an automatic air brake in rail vehicles with the aid of a brake testing device, in which compressed air is supplied by separate external devices and the volumetric flow rate introduced into the air pipe is measured by means of a volumetric flow rate sensor when a predetermined nominal pressure is reached in the brake testing device, **characterized in that** the pressure holding time required for reaching the nominal pressure in the air pipe on the last rail car is determined based on the steepness of the decrease in the volumetric flow rate being introduced within a defined time period after the beginning of the measurement.

2. The method for the time-optimized filling of an air pipe according to Claim 1, **characterized in that** the functional correlation is determined by specifying an approximation function over the pressure holding time in dependence on the steepness based on the results of measurements obtained during practical filling tests on trains of different lengths and filling levels.

3. The method for the time-optimized filling of an air pipe according to at least one of Claims 1 to 2, **characterized in that** the control transmits a signal "air pipe filled" and the filling process is declared as being completed when the volume being introduced is nearly constant, i.e., when the volumetric flow rate being introduced remains almost unchanged.

4. The method for the time-optimized filling of an air pipe according to at least one of Claims 1 to 3, **characterized in that** the main air pipe is used as the air pipe.

5. The method for the time-optimized filling of an air pipe according to Claim 4, **characterized in that** the predetermined nominal pressure in the brake testing device is adjusted to a value between 5.2 bar and 5.4 bar, particularly 5.3 bar.

## Revendications

1. Procédé de gonflage en temps optimal d'une canalisation d'air d'un frein automatique à air comprimé de véhicules ferroviaires à l'aide d'un appareil d'essai de freins, dans lequel un apport d'air comprimé est assuré par des dispositifs externes spéciaux et dans lequel, à l'atteinte d'une pression théorique prescrite dans l'appareil d'essai de freins, le flux volumique engrangé dans la canalisation d'air est enregistré par un capteur de flux volumique, **caractérisé en ce qu'**on détermine, à partir de la pente de déclin du flux volumique engrangé pendant une durée définie après le début de la mesure, la durée de maintien de la pression nécessaire pour atteindre la pression théorique dans la canalisation d'air au dernier wagon.

2. Procédé de gonflage en temps optimal d'une canalisation d'air selon la revendication 1, **caractérisé en ce que** la connexité fonctionnelle est déterminée en définissant, à partir de résultats de mesure d'essais pratiques de gonflage sur des trains de longueur et de niveau de gonflage différents, une fonction d'approximation sur la durée de maintien de la pression en fonction de la pente.

3. Procédé de gonflage en temps optimal d'une canalisation d'air selon au moins une des revendications 1 à 2, **caractérisé en ce que**, avec un volume d'engrangement presque constant, c'est-à-dire un flux volumique engrangé presque inchangé, un signal « canalisation d'air gonflée » est émis par la commande et qu'ainsi l'opération de gonflage est déclarée terminée.

4. Procédé de gonflage en temps optimal d'une canalisation d'air selon au moins une des revendications 1 à 3, **caractérisé en ce qu'**on utilise comme canalisation d'air la canalisation d'air principale.

5. Procédé de gonflage en temps optimal d'une canalisation d'air selon la revendication 4, **caractérisé en ce qu'**on établit comme pression théorique prescrite dans l'appareil d'essai de freins une valeur de 5,2 bar à 5,4 bar, notamment 5,3 bar.
